# EUROPEAN PATENT SPECIFICATION

(11) **EP 4 155 850 B1**
(45) Date of publication and mention of the grant of the patent: **27.11.2024**
(21) Application number: 22196342.4
(22) Date of filing: 19.09.2022
(51) Int. Cl.: G05B 19/4062, B65B 9/10, B65B 57/00

(54) **A METHOD FOR CONDITION MONITORING OF A MOVING MACHINE COMPONENT**
VERFAHREN ZUR ZUSTANDSÜBERWACHUNG EINER BEWEGLICHEN MASCHINENKOMPONENTE
PROCÉDÉ DE SURVEILLANCE DE L'ÉTAT D'UN COMPOSANT MOBILE D'UNE MACHINE

(30) Priority: 24.09.2021 EP 21198923
(43) Date of publication of application: 29.03.2023
(73) Proprietor: Tetra Laval Holdings & Finance S.A., 1009 Pully (CH)
(72) Inventor: LINDBERG, Peter, 212 32 MALMÖ (SE)
(74) Representative: Tetra Pak - Patent Attorneys SE

(56) References cited:
- US-A1- 2015 051 728
- US-A1- 2017 074 753
- US-A1- 2018 196 104
- US-A1- 2019 354 077

## Description

### Technical Field

The present invention relates to a method of condition monitoring of a moving machine component, a related computer program product and a system for condition monitoring of a moving machine component, such as motors, pistons, or other actuators employed in packaging or filling machines in a liquid food processing application.

### Background

Condition monitoring of machine components in packaging or filling machines and related systems for production of sealed packaging containers for liquid- or semi liquid food is critical in order to configure optimal operating settings and ensuring a desired performance over a period of time. Defects in the produced packaging containers may lead to sub-optimal aseptic performance. Hence, it is desirable to develop efficient tools and procedures for identification of faulty behavior of the components in such systems that may result in various types of defects in the produced packaging containers. Since the latest generations of filling machines or related apparatuses employed for the production of sealed packaging containers operate at very high speeds to further increase the throughput of the production line, it has been cumbersome to accurately characterize all aspects of the performance of the package container production without disruption of the production line. This may lead to sub-optimal performance and lowered throughput. A problem is thus how to implement a reliable control tool and strategy with a minimum impact on the production while requiring a minimum amount of resources.

Furthermore, the ever decreasing tolerances in the packaging or filling machines of the high-throughput production line is associated with an increasing need to detect deviating trends in the behavior of the machine components and fault prediction thereof. Aseptic performance may be compromised before a deviation manifests itself in the produced food container with current monitoring routines. The consequences are significant when coupled with a high-throughput production line. A further problem is how to pick up the deviating trends from the large amounts of data generated from such production lines, and how to effectively identify the correct maintenance activity so that the impact on the production is minimized.

Further background art is reflected in the following patent documents: US 2019/354077 disclosing calculating torque values from motion parameters to establish a "3D torque model. US 2018/196104 disclosing using a baseline motion performance model of a motion system, which is created by collecting motor operating variables, to compare real-time motor operating variables with values of the baseline motion performance model to determine the performance state of the motion system. US 2015/051728 disclosing how to determine a reference waveform/basline against which subsequent values are compared.

### Summary

It is an object of the invention to at least partly overcome one or more limitations of the prior art. In particular, it is an object to provide for an improved condition monitoring of a machine component in a packaging or filling machine in a liquid food processing application, and in particular providing a method for reliably and timely detecting deviant behavior or impending breakdown, in order to give the operator an effective tool to identify and plan a maintenance activity for the relevant components without impacting production.

In a first aspect of the invention, this is achieved by a method for condition monitoring of a moving machine component in a packaging or filling machine in a liquid food processing application, comprising moving the machine component according to a cycle of a defined motion profile comprising accelerating the machine component to overcome a mechanical load so that a velocity and a position of the defined motion profile is followed, the mechanical load comprising a sum of contributing load components comprising an external mechanical force on the machine component and an inertia, and/or a moment of inertia, that the machine component exhibits, the method further comprising registering values of a measured force causing said acceleration and/or of a measured motion parameter associated with the movement of the machine component according to the defined motion profile, generating a first distribution of the registered values, associating the first distribution with a first load response in a mechanical load model, generating a second distribution of associated registered values of said force and/or motion parameter subsequently measured when moving the machine component according to the cycle at a subsequent point in time, associating the second distribution with a second load response in the mechanical load model, and determining a change in the load components of the mechanical load at said subsequent point in time comprising determining an amount of variation of a load component of the mechanical load based on a difference between the first load response and the second load response, for said condition monitoring. The method comprises assigning the load components as respective variable load parameters in the mechanical load model to generate a virtual load response output in dependence on said variable load parameters, determining a maintenance operation of the machine component after a duration of operation comprising generating a distribution of associated registered values subsequently measured when moving the machine component according to the cycle after said duration, associating said distribution with a measured load response, determining a change of the respective variable load parameter in the mechanical load model resulting in a minimized difference between the measured load response and the virtual load response output, and determining said maintenance operation based on the change of the respective variable load parameter.

In second aspect of the invention, this is achieved by a system for condition monitoring of a moving machine component in a packaging or filling machine in a liquid food processing application, comprising a processing unit configured to move the machine component according to a cycle of a defined motion profile comprising accelerating the machine component to overcome a mechanical load so that a velocity and a position of the defined motion profile is followed, the mechanical load comprising a sum of contributing load components comprising an external mechanical force on the machine component and an inertia, and/or a moment of inertia, that the machine component exhibits, the method further comprising register values of a measured force causing said acceleration and/or of a measured motion parameter associated with the movement of the machine component according to the defined motion profile, generate a first distribution of the registered values, associate the first distribution with a first load response in a mechanical load model, generate a second distribution of associated registered values of said force and/or motion parameter subsequently measured when moving the machine component according to the cycle at a subsequent point in time, associate the second distribution with a second load response in the mechanical load model, and determine a change in the load components of the mechanical load at said subsequent point in time comprising determine an amount of variation of a load component of the mechanical load based on a difference between the first load response and the second load response, for said condition monitoring. The processing unit is configured to assign the load components as respective variable load parameters in the mechanical load model to generate a virtual load response output in dependence on said variable load parameters, determine a maintenance operation of the machine component after a duration of operation comprising generating a distribution of associated registered values subsequently measured when moving the machine component according to the cycle after said duration, associating said distribution with a measured load response, determining a change of the respective variable load parameter in the mechanical load model resulting in a minimized difference between the measured load response and the virtual load response output, and determining said maintenance operation based on the change of the respective variable load parameter.

In third aspect of the invention, this is achieved by a computer program product comprising instructions which, when the program is executed by a computer, cause the computer to carry out the steps of the method according to the first aspect.

Further examples of the invention are defined in the dependent claims, wherein features for the first aspect may be implemented for the second and subsequent aspects, and vice versa.

Determining first and second load responses of the moving machine component and determining an amount of variation of the contributing load components of the mechanical load on the machine component based on a difference between the first load response and the second load response provides for an accurate and reliable classification of a condition of the machine component. A facilitated condition monitoring of a moving machine component is thus provided for reliably and timely detecting deviant behavior or impending breakdown with a minimal amount of data analysis needed by the operator.

Still other objectives, features, aspects and advantages of the invention will appear from the following detailed description as well as from the drawings.

### Drawings

Embodiments of the invention will now be described, by way of example, with reference to the accompanying schematic drawings.
Fig. 1 is a schematic illustration of a system for condition monitoring of a moving machine component in a packaging or filling machine in a liquid food processing application;
Fig. 2 is a diagram illustrating a defined motion profile with a set velocity for a moving machine component;
Fig. 3a is a diagram illustrating an example of a first distribution of a measured force (T₁) causing the acceleration of the machine component according to the defined motion profile and of a measured motion parameter (p₁) associated with the movement of the machine component according to the defined motion profile;
Fig. 3b is a diagram illustrating an example of a second distribution of a measured force (T₂) causing the acceleration of the machine component according to the defined motion profile and of a measured motion parameter (p₂) associated with the movement of the machine component according to the defined motion profile;
Fig. 4a corresponds to the illustration in Fig. 3a;
Fig. 4b is a diagram illustrating a further example of a second distribution of a measured force (T₂) and a motion parameter (p₂) associated with the movement of the machine component according to the defined motion profile;
Fig. 5a corresponds to the illustration in Fig. 3a;
Fig. 5b is a diagram illustrating a further example of a second distribution of a measured force (T₂) and a motion parameter (p₂) associated with the movement of the machine component according to the defined motion profile;
Fig. 6a corresponds to the illustration in Fig. 3a;
Fig. 6b is a diagram illustrating a further example of a second distribution of a measured force (T₂) and a motion parameter (p₂) associated with the movement of the machine component according to the defined motion profile;
Fig. 7a corresponds to the illustration in Fig. 3a;
Fig. 7b is a diagram illustrating a further example of a second distribution of a measured force (T₂) and a motion parameter (p₂) associated with the movement of the machine component according to the defined motion profile;
Fig. 8a is a flowchart of a method for condition monitoring of a moving machine component in a packaging or filling machine in a liquid food processing application;
Fig. 8b is another flowchart of a method for condition monitoring of a moving machine component in a packaging or filling machine in a liquid food processing application;
Fig. 8c is another flowchart of a method for condition monitoring of a moving machine component in a packaging or filling machine in a liquid food processing application; and
Fig. 8d is a schematic diagram of a system for condition monitoring of a moving machine component in a packaging or filling machine in a liquid food processing application.

### Detailed Description

Embodiments of the invention will now be described more fully hereinafter with reference to the accompanying drawings, in which some, but not all, embodiments of the invention are shown. The invention may be embodied in many different forms and should not be construed as limited to the embodiments set forth herein.

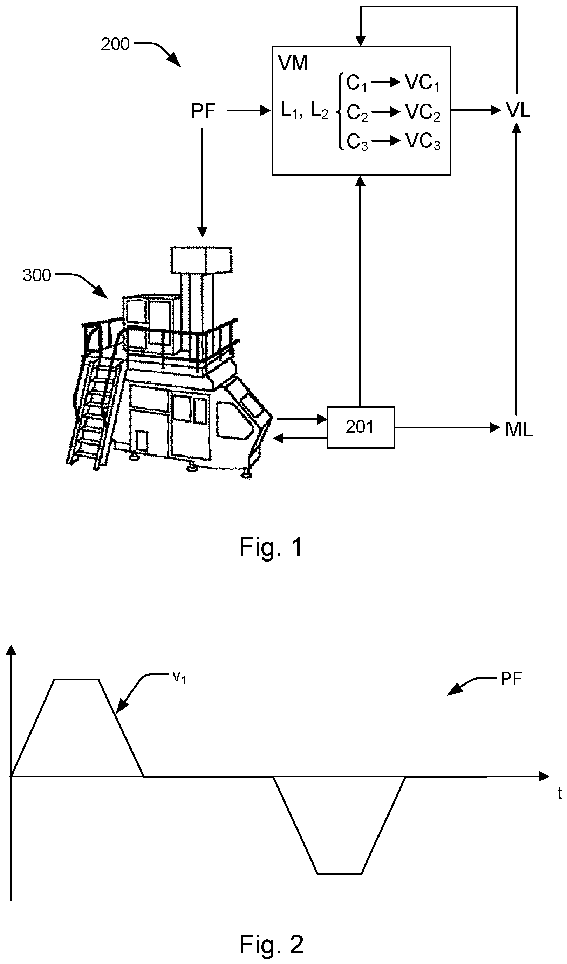

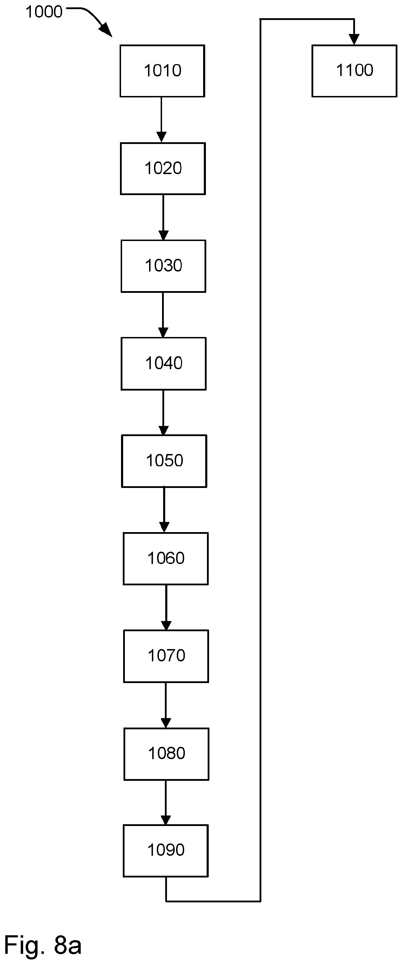

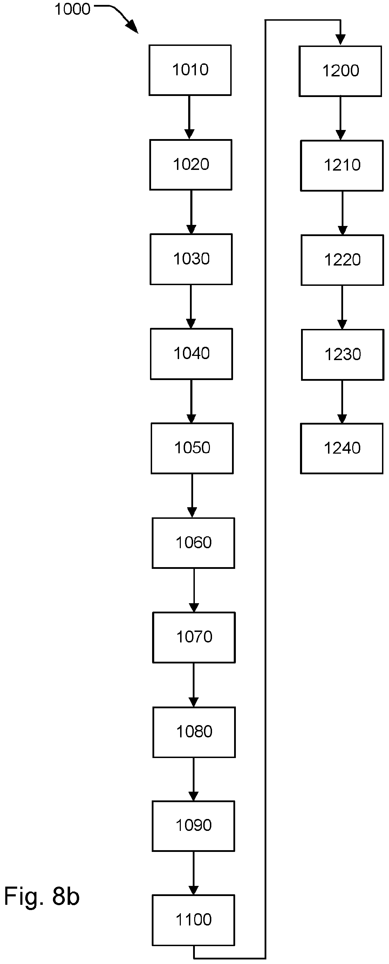

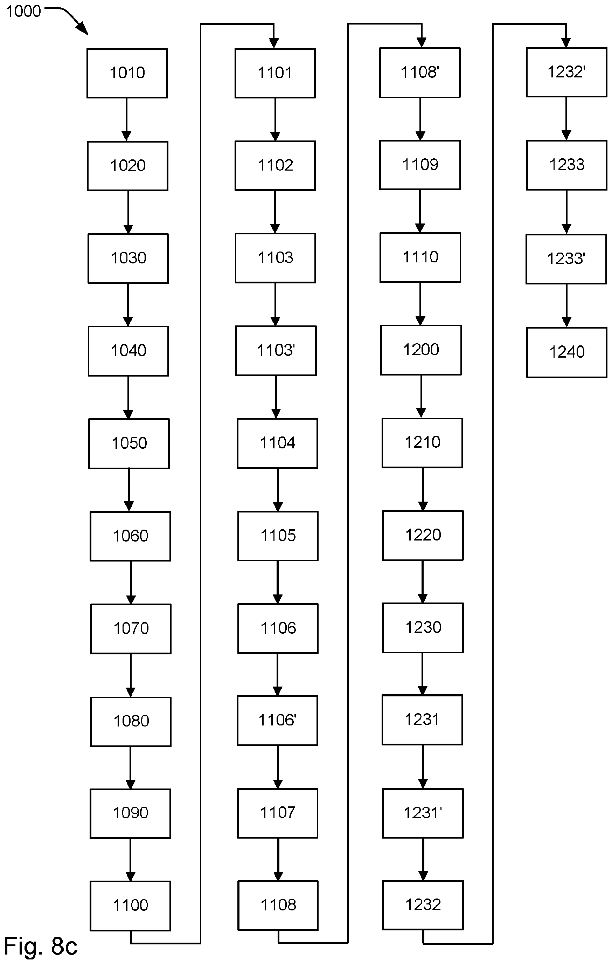

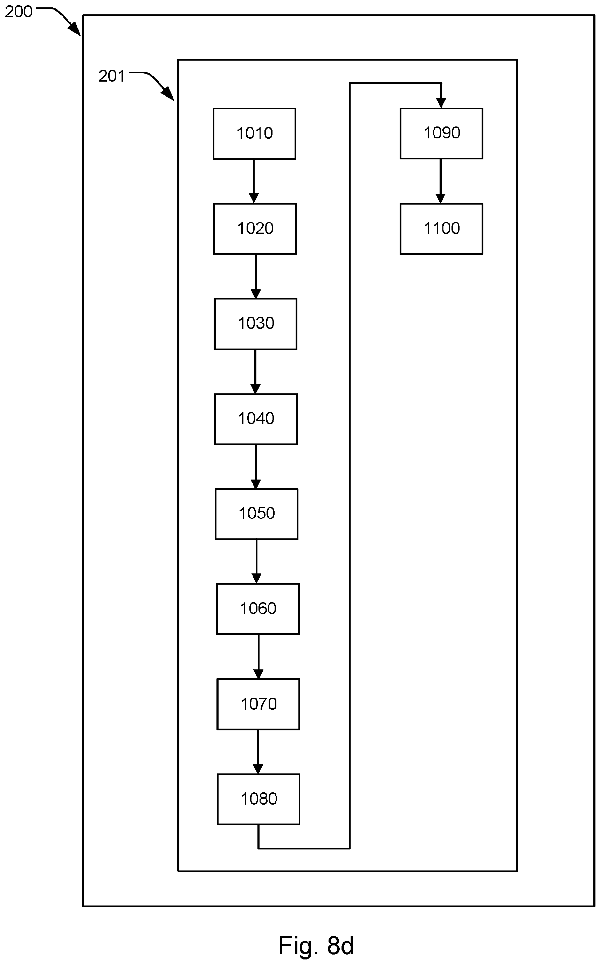

Fig. 8a illustrates a flow chart of a method 1000 for condition monitoring of a moving machine component (not shown) in a packaging or filling machine 300 in a liquid food processing application. The order in which the steps of the method 1000 are described and illustrated should not be construed as limiting and it is conceivable that the steps can be performed in varying order. Fig. 1 is a schematic illustration of a system 200 configured to execute the method 1000 as described below. The moving machine component may comprise a servo motor, a linear actuator, or any actuating component driving an axis of motion in a packaging or filling machine 300.

The method 1000 comprises moving 1010 the machine component according to a cycle of a defined motion profile (PF). Fig. 2 illustrates an example of a defined motion profile (PF) over time (t), where the set velocity (v₁) assumes a trapezoidal shape with an acceleration to a defined value, followed by a deceleration, before the motion is reversed. In one example the moving machine component is a servo motor driving a belt in two directions. The method 1000 comprises accelerating 1020 the machine component to overcome a mechanical load so that a velocity (v) and a position of the defined motion profile (PF) is followed, such as the velocity v₁ in the example of Fig. 2. The values (v₁) in Fig. 2 represent an amplitude of the velocity (v₁) as function of time (t). The servo motor thus needs to apply a torque to overcome its mechanical load and accelerate the belt according to the defined motion profile (PF). The mechanical load comprises a sum of contributing load components (C), further referred to as C₁, C₂, and C₃, in the examples below, but generally denoted load components (C) in the disclosure for brevity. The load components (C) comprises an external mechanical force on the machine component and an inertia, and/or a moment of inertia, that the machine component exhibits. The external mechanical load may comprise different types of friction, as further discussed below, or any other external force applied to the machine component. A moment of inertia relates to a rotating mass, i.e. a rotating machine component such as a servo motor, while inertia in general relates to any other motion, e.g. of a linear actuator.

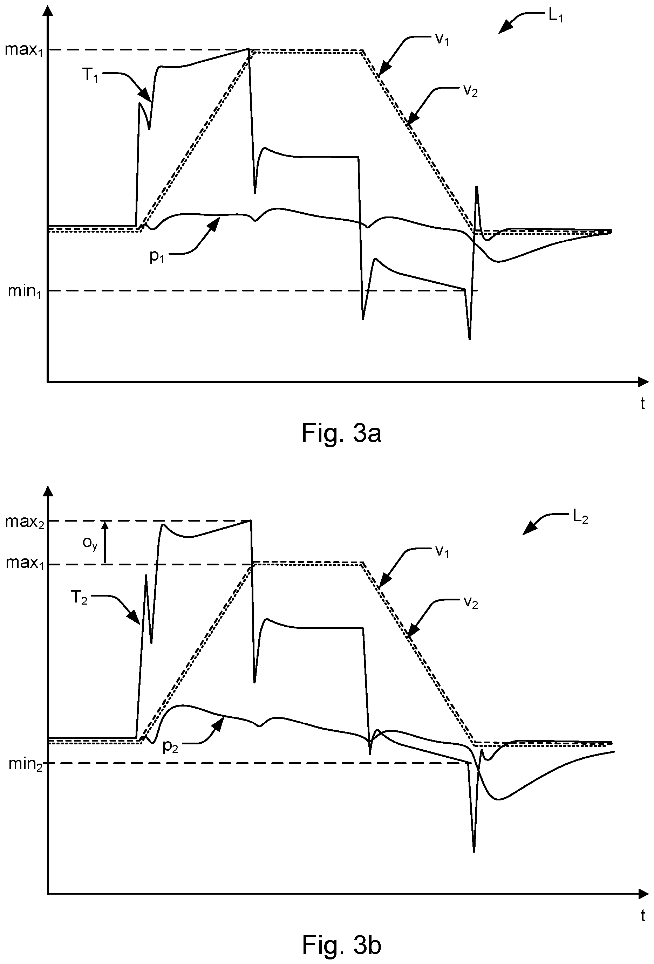

The method further comprises registering 1030 values of a measured force (T) causing the aforementioned acceleration according to the defined motion profile (PF) and/or of a measured motion parameter (p) associated with the movement of the machine component according to the defined motion profile (PF). For a rotating machine component, such as a servo motor, the force (T) should be construed as the torque required to drive the mechanical load according to the defined motion profile (PF). Similarly, in examples when the machine component may be an actuator such as a linear actuator, e.g. a hydraulic piston, the force (T) should be construed as the force required to be applied by such linear actuator to drive the mechanical load according to the defined motion profile (PF). In either case the force (T) may be measured by a sensor (not shown) and the measured values may be recorded. Fig. 3a illustrates an example of a first distribution of a torque (T₁) applied by the machine component so that a set velocity (v₁) of the defined motion profile (PF) is followed with an actual velocity (v₂). The values (T₁) in Fig. 3a represent an amplitude of the torque (T₁) as function of time (t).

Alternatively, or in addition, a motion parameter (p), such as a position associated with the movement of the machine component according to the defined motion profile (PF) may be measured and registered. The aforementioned position may in some examples correspond to a position error (p₁) as exemplified in Fig. 3a, i.e. a difference between a set position according to the defined motion profile (PF) and the resulting/actual position. The values (p₁) in Fig. 3a represent an amplitude of position error (p₁) as function of time (t). It is conceivable that various other measurable movement characteristics coupled to the movement of the current machine component can be determined for the purposes of carrying out the method 1000, such as values of displacement, torque or any other force, speed, or acceleration describing the undergoing motion during the defined motion profile (PF).

The method 1000 comprises generating 1040 a first distribution (T₁, p₁) of the registered values, e.g. as illustrated in the aforementioned Fig. 3a. The method 1000 comprises associating 1050 the first distribution (T₁, p₁) with a first load response (L₁) in a mechanical load model (VM). Each machine component driving an axis of motion in the packaging or filling machine 300 will thus have an associated load response, which is retrieved in response to the motion defined by the motion profile (PF), and which is time dependent. The mechanical load model (VM) may thus be continuously populated with the respective load responses for the different axes of motion in the packaging or filling machine 300, so that a virtual representation of the aforementioned machine is built, at a defined point in time of the operation of the machine.

The method 1000 comprises generating 1060 a second distribution (T₂, p₂) of associated registered 1070 values of said force (T) and/or motion parameter (p) subsequently measured when moving the machine component according to the cycle, defined by the motion profile (PF), at a subsequent point in time. The subsequent point in time may be after several hours of operation of the packaging or filling machine 300, such as after weeks, months or years of operation in a production line. Fig. 3b is an example of a second distribution (T₂, p₂) obtained at such subsequent point in time. The method 1000 comprises associating 1080 the second distribution (T₂, p₂) with a second load response (L₂) in the mechanical load model (VM) for the current axis of motion in the packaging or filling machine 300.

The method 1000 comprises determining 1090 a change in the load components (C) of the mechanical load at the subsequent point in time. Determining a change in the load components (C) comprises determining 1100 an amount of variation of a load component, such as a load component C₁, C₂, C₃, of the mechanical load based on a difference between the first load response (L₁) and the second load response (L₂), for the condition monitoring. Determining first and second load responses (L₁, L₂) of the moving machine component and determining an amount of variation of the contributing load components (C) of the mechanical load on the machine component based on a difference between the first load response (L₁) and the second load response (L₂) provides for an accurate and reliable classification of a condition of the machine component. Variations between the first and second load responses (L₁, L₂) are thus utilized to determine changes in the load components (C), e.g. whether the load component responsible for the variation is associated with a type of external mechanical force on the machine component, such as friction or an impulse exerted onto the machine component, and/or a change in the inertia that the machine component exhibits. A selected maintenance operation may be associated with the combinations of load components (C) identified as responsible for the variation in the load responses (L₁, L₂). A facilitated condition monitoring of a moving machine component is thus provided for reliably and timely detecting deviant behavior or impending breakdown with a minimal amount of data analysis needed by the operator.

Prior solutions which are typically focused on detecting whether a certain measurable characteristic is within defined threshold levels for the condition monitoring have limitations in terms of resolving changing trends during early stages of the deviation. For example, a servo motor may produce a position lag when its peak torque is approached or exceeded. Even a small deviation at the onset of such lag may be detrimental in high-throughput production lines, and as mentioned above, may already compromise the aseptic performance. In other situations, servo motors may need cooling due to operating close to, or exceeding, the rms torque limits, with downtime of the production line as a result. The method 1000 provides for capturing the onset of detrimental deviations coupled to the axes of motion in a packaging or filling machine 300, and in particular for determining which load component (C) is the cause of the deviation based on the detected differences between the first and second load responses (L₁, L₂) as described above. A particular maintenance operation associated with the identified load component (C) can thus be readily executed by the operator.

Different statistical measures may be utilized to determine the relationship between the first load response (L₁) and the second load response (L₂), such as determining a relationship between mean- or dispersion values, or trends in the distributions (T₁, p₁, T₂, p₂). A statistical significant relationship may be identified if the resulting deviations, from such comparison, is within defined statistical limits or criteria. Variations in the machine component over time may thus be identified, by comparing sets of such distributions from load responses (L₁, L₂) obtained at a different points in time.

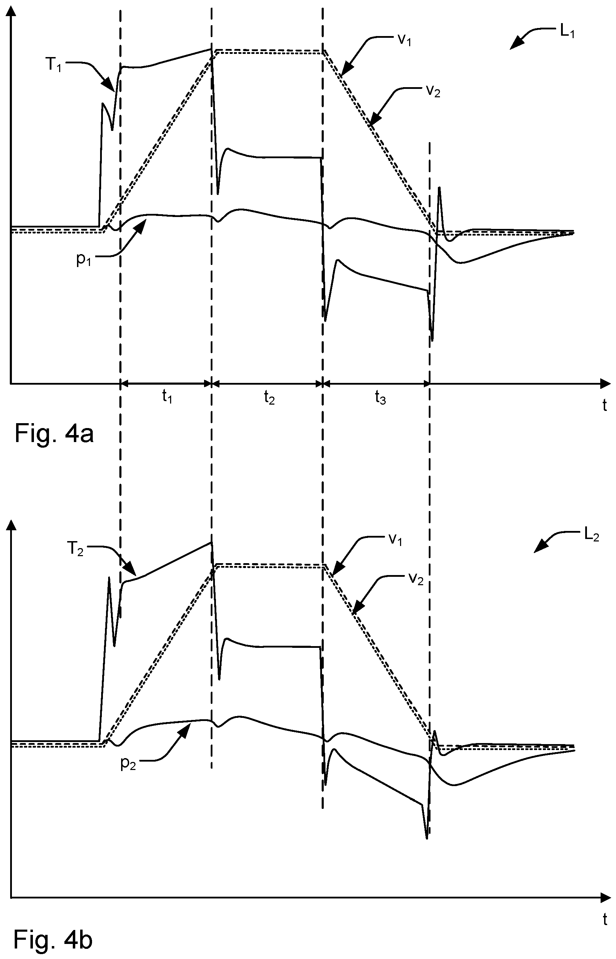

Determining the amount of variation of the load component (C) may comprise determining 1101 a change in a derivative between the first distribution (T₁, p₁) and the second distribution (T₂, p₂) of the respective first and second load responses (L₁, L₂). Turning to the example in Fig. 4a, the defined motion profile (PF) and the associated load response (L₁) has been divided in three time periods (t₁, t₂, t₃), corresponding to a period of acceleration, constant speed, and deceleration, respectively. A change in the derivative of the torque (T₂) in the second load response (L₂), in the period of acceleration (t₁), is determined relative the corresponding period in the first load response (L₁). The derivative is increased during t₁ for the torque T₂ compared to the torque T₁ in the first load response (L₁). Likewise, the derivative of T₂ is increased during the period of deceleration t₃, compared to T₁. Variations in the derivative of the distributions in the first and second load responses (L₁, L₂) may thus be utilized for identifying an amount of variation of a load component (C) that contributes to the total mechanical load on the current axis of motion. The example in Figs. 4a-b illustrates a change of a load component (C) which is dependent on acceleration.

The method 1000 may comprise determining 1102 the change in the derivative as a change in a viscous friction contributing as an external mechanical force to the mechanical load, and associating 1103 the load component (C) with the viscous friction. Viscous friction can thus be seen as proportional to speed, and acting "against" the direction of movement. Viscous friction may be especially high in worm gears and in lubricated sliding greased surfaces. If the grease dries then the viscous friction may increase. The increase in the derivative of T₂ during t₁ and t₃ in the second load response L₂, compared to T₁ in the first load response L₁, is thus associated with an increase in viscous friction in the example of Figs 4a-b.

The method 1000 may comprise determining 1103' the load component (C) as a first load component C₁ in the mechanical load model (VM). The viscous friction may thus be associated with the first load component C₁ in the mechanical load model (VM). The load responses (L₁, L₂) stored in the mechanical load model (VM) for the different axes of motion in the packaging or filling machine 300 may thus be compared to determine changes in the derivative of the respective distributions (T₁, p₁, T₂, p₂) during periods of acceleration and deceleration in the motion defined by the motion profile (PF). The relevant load component, e.g. a first load component C₁, may thus be determined from the load responses (L₁, L₂) in the mechanical load model (VM) as a change in viscous friction for the current axis of motion.

As described further below with reference to Fig. 1, having determined the impact of the first load component C₁, e.g. the viscous friction, on the load responses (L₁, L₂), the mechanical load model (VM) can be utilized to generate a simulated load response, referred to as a virtual load response output (VL) below, with the first load component C₁ as a variable parameter (VC₁) and the defined motion profile (PF) as input. The simulated load response may be compared with a measured load response (ML) having a distribution (e.g. T₂ in Fig. 4b) of values measured at a subsequent point in time for the current axis of motion, also with the defined motion profile (PF) as input. The difference between the measured load response (ML) and the simulated load response (VL) may be minimized by adjusting the first load component C₁ as a variable parameter, to characterize the impact of the first load component C₁, e.g. the viscous friction, on the mechanical load at the subsequent point in time. A maintenance routine may be identified which is dependent on the amount of adjustment of VC₁ in the mechanical load model (VM) when minimizing the difference between the measured load response (ML) and the simulated load response (VL). The adjustment of VC₁ may be determined relative a previously determined reference in the mechanical load model (VM) representing a desired operational state of the machine component.

Turning again to the example in Figs 4a-b, it should be understood that although it has been described above that the differences in the torque T₁, T₂, between the different load responses (L₁, L₂) may be utilized to characterize the first load component C₁, it is conceivable that a similar comparison may be made between the position errors p₁, p₂, to determine the variation in the first load component C₁. For example, the derivative of p₂ in Fig. 4b is increased slightly during t₁ and t₃, compared to p₁ in Fig. 4a.

Determining the amount of variation of the load component (C) may comprise determining 1104 a change in a maximum value (maxi, max₂) and/or a minimum value (mini, min₂) in the first and second distributions (T₁, p₁, T₂, p₂) of the respective first and second load responses (L₁, L₂). I.e. the first distribution (T₁, p₁) is compared to the second distribution (T₂, p₂) to determine the aforementioned change. Figs. 3a-b show an example where a max value (max₂) of the torque curve (T₂) in the second load response (L₂) has increased relative the max value (max₁) of the torque curve (T₁) in the first load response (L₁). Further, the minimum value (min₂) of T₂ has changed compared to the minimum value (min₁) of T₁ in the first load response (L₁). I.e. the absolute value of min₂ has decreased. Variations in the maximum and/or minimum values of the distributions in the first and second load responses (L₁, L₂) may thus be utilized for identifying an amount of variation of a load component (C) which contributes to the total load on the machine component for the current axis of motion.

The example in Figs. 3a-b illustrates an overall shift of the torque curve T₂ in the positive direction compared to T₁ when the velocity of the defined motion profile (PF) is greater than zero. The change may be seen as a shift of T₂ in the positive direction, creating an offset (o_{y}) with respect to T₁ as schematically indicated in Fig. 3b with respect to max₁ and max₂. A similar shift and offset (o_{y}) of T₂ may be realized with respect to min₁ and min₂, as well as during the intermediate section where the velocity is constant. The method 1000 may comprise determining 1105 an off-set (o_{y}) between the first and second load response (L₁, L₂) with regards to respective maximum (maxi, max₂) and minimum (mini, min₂) values as a change in a static friction contributing as an external mechanical force to the mechanical load. The method 1000 may further comprise associating 1106 the load component (C) with the static friction. Static friction can be seen as being constant in value, and acting "against" the direction of movement. The offset (o_{y}) of T₂ in the second load response L₂, in the positive direction, is thus associated with an increase in static friction in the example of Figs. 3a-b.

The method 1000 may comprise determining 1106' the load component (C) as a second load component C₂ in the mechanical load model (VM). The static friction may thus be associated with the second load component C₂ in the mechanical load model (VM). The load responses (L₁, L₂) stored in the mechanical load model (VM) for the different axes of motion in the packaging or filling machine may thus be compared to identify any offset (o_{y}) between the respective distributions (T₁, p₁, T₂, p₂) during periods where the velocity is greater than zero in the motion defined by the motion profile (PF). The relevant load component, i.e. the second load component C₂, may thus be determined from the load responses (L₁, L₂) in the mechanical load model (VM) as a change in static friction for the current axis of motion.

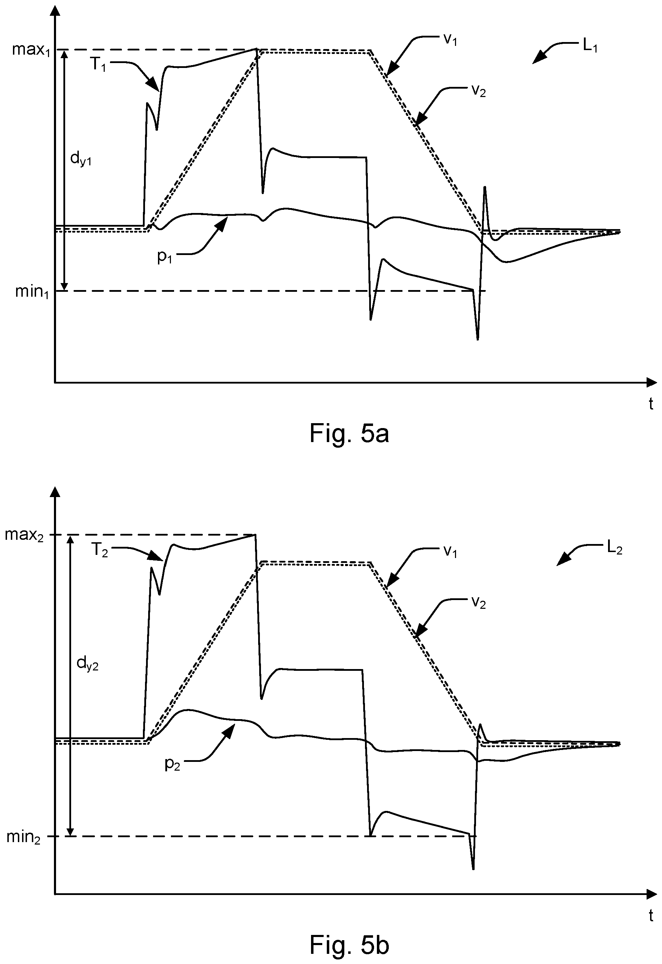

The example in Figs. 5a-b illustrates an increase of the range (d_{y2}) between the minimum value (min₂) and the maximum value (max₂) for the torque curve T₂ compared to the corresponding range (d_{y1}) for T₁ when the acceleration is different from zero. The method 1000 may comprise determining 1107 a difference in the size of the range (d_{y1}, d_{y2}) between the minimum and maximum value (min₁, max₁), (min₂, max₂), in the respective first and second load response (L₁, L₂) as a change in the inertia, and/or a moment of inertia, contributing to the mechanical load. As mentioned above, the moment of inertia relates to rotating masses. The method 1000 may further comprise associating 1108 the load component (C) with the inertia, and/or a moment of inertia. An increase in the moment of inertia requires a greater torque for accelerating the associated mass to the set velocity, as well as a greater amount of torque to stop the mass from moving. The increased range d_{y2} in the second load response L₂ is thus associated with an increase in the movement of inertia. An increase in the mass may for example be seen in cases where replacement components have been used, having been manufactured from a different material, e.g. of steel instead of aluminium.

The method 1000 may comprise determining 1108' the load component (C) as a third load component C₃ in the mechanical load model (VM). The inertia, or moment of inertia, may thus be associated with the third load component C₃ in the mechanical load model (VM). The load responses (L₁, L₂) stored in the mechanical load model (VM) for the different axes of motion in the packaging or filling machine 300 may thus be compared to identify variations in the range (d_{y1}, d_{y2}) between the respective distributions (T₁, p₁, T₂, p₂) during periods where the velocity is greater than zero in the motion defined by the motion profile (PF). The relevant load component, e.g. a third load component C₃, may thus be determined from the load responses (L₁, L₂) in the mechanical load model (VM) as a change in inertia, or moment of inertia, for the current axis of motion.

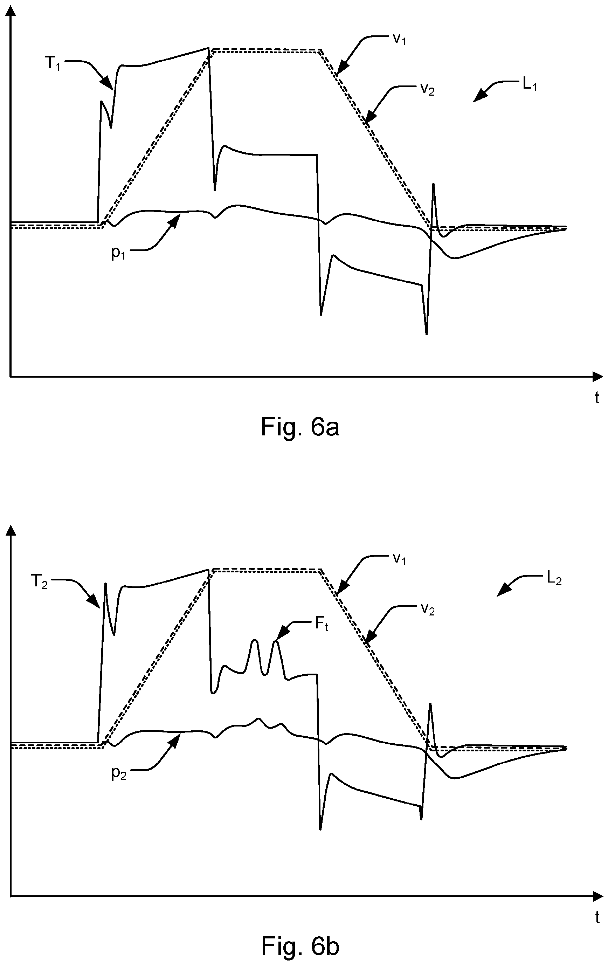

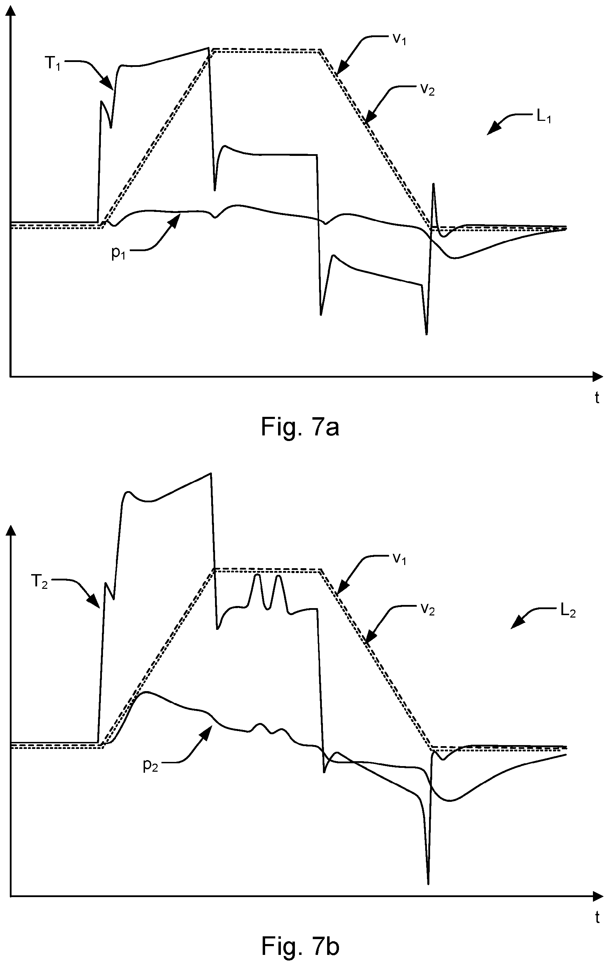

Figs. 6a-b illustrate a further example where two external load transients (Fₜ) are shown in the second load response L₂. For example, the moving machine component may be subjected to two collision events with obstacles where the external load is momentaneously increased. Figs. 7a-b illustrates another example where the impact on the load response (T₂) from the sum of load components C₁, C₂, C₃, discussed above is illustrated.

The method 1000 may comprise determining 1109 the amount of variation of the first, second and third load components (C₁, C₂, C₃) in the mechanical load model (VM) based on the aforementioned differences between the first load response (L₁) and the second load response (L₂). The first load response (L₁) may be determined for a known reference status for each relevant axis of motion in the packaging or filling machine 300, which may be indicative of a desired, e.g. healthy, operational state. It is conceivable that the defined motion profile (PF) may be tailored to the particular machine component for the respective axis of motion. The second load response (L₂) is determined at a subsequent point in time, for each of the axis of motion and the respectively associated defined motion profile (PF). Variations of the first, second and third load components (C₁, C₂, C₃) may subsequently be determined from the first and second load response (L₁, L₂) as described above. A maintenance action may then be triggered in dependence on the variation of the load components (C₁, C₂, C₃).

The method 1000 may comprise assigning 1110 the load components (C₁, C₂, C₃) as respective variable load parameters (VC₁, VC₂, VC₃) in the mechanical load model (VM) to generate a virtual load response output (VL) in dependence on the variable load parameters (VC₁, VC₂, VC₃). For example, the method 1000 may comprise assigning 1110 the first, second and third load components (C₁, C₂, C₃) as respective variable load parameters (VC₁, VC₂, VC₃) in the mechanical load model (VM) to generate a virtual load response output (VL) in dependence on the variable load parameters (VC₁, VC₂, VC₃). The mechanical load model (VM) represents the mechanical load on the particular moving machine component, where the components (C₁, C₂, C₃) of the mechanical load may be controlled by the variable load parameters (VC₁, VC₂, VC₃). The defined motion profile (PF) may be input to the mechanical load model (VM), as schematically indicated in Fig. 1. The defined motion profile (PF) defines the set input values, such as a set velocity (v₁). The force (T), e.g. torque (T₁, T₂), required to drive the mechanical load in the mechanical load model according to the set input values is calculated and is referred here to as the virtual load response output (VL). The mechanical load in the mechanical load model is represented by load parameters (VC₁, VC₂, VC₃) in the examples above. The mechanical load model (VM) may be in communication with a control algorithm such as a PID regulator which takes the set values of the defined motion profile (PF), such as a set velocity (v₁), as input together with the actual velocity (v₂) and actual position from in the virtual load response output (VL). The PID outputs the torque (T₁, T₂) and the position error (p₁, p₂), and the determined torque (T₁, T₂) is then fed back as input to the mechanical load model (VM).

The virtual load response output (VL) may be controlled by the load parameters (VC₁, VC₂, VC₃). The virtual load response output (VL) may thus be tailored to model the particular axis of motion in the packaging or filling machine 300 by controlling the load parameters (VC₁, VC₂, VC₃). I.e. the load parameters (VC₁, VC₂, VC₃) may be optimized such that running the defined motion profile (PF) as input to the mechanical load model (VM) generates virtual load response output (VL) which is optimized to a measured load response (ML) in the packaging or filling machine 300 which also has the defined motion profile (PF) as input, as schematically illustrated in Fig. 1. The optimization may comprise minimizing the difference between the virtual load response output (VL) and the measured load response (ML) of the machine component of the current axis of motion, such as a measured torque curve.

A mechanical load model (VM) may thus be established as an image of the packaging or filling machine 300 at a defined point in time where the mechanical load on a respective axis of motion has an associated representation by load parameters (VC₁, VC₂, VC₃) being determined as described above in relation to Figs. 1 - 7. I.e. the different load components (C₁, C₂, C₃), and associated load parameters (VC₁, VC₂, VC₃) in the mechanical load model (VM), are determined from the characteristics of the load responses (L₁, L₂).

Given the determined influence of the load parameters (VC₁, VC₂, VC₃) on the virtual load response output (VL), the load parameters (VC₁, VC₂, VC₃) may be varied to optimize the virtual load response output (VL) to a measured load response (ML) at a subsequent point in time, e.g. after weeks, months or years of operation of the moving machine component. A maintenance routine may be determined depending on how much the different load parameters (VC₁, VC₂, VC₃) needs to be varied in order to minimize the difference between the generated virtual load response output (VL) and the subsequently measured load response (ML), e.g. T₂ in Fig. 3b.

The method 1000 may thus comprise determining 1200 a maintenance operation of the machine component after a duration of operation. The method 1000 may comprise generating 1210 a distribution (e.g. T₂, p₂) of associated registered values (T, p) subsequently measured when moving the machine component according to the defined motion profile (PF) after said duration. The method 1000 may comprise associating 1220 the distribution with a measured load response (ML). The method 1000 may comprise determining 1230 a change of the respective load parameter (VC₁, VC₂, VC₃) in the mechanical load model (VM) resulting in a minimized difference between the measured load response (ML) and the virtual load response output (VL). The method 1000 may comprise determining 1240 the maintenance operation based on the change of the respective load parameter (VC₁, VC₂, VC₃).

In one example, related to the discussion of Figs. 4a-b, the method 1000 comprises assigning 1231 the first load component (C₁) as a first variable load parameter (VC₁) in the mechanical load model (VM), and changing 1231' the first variable load parameter (VC₁), associated with the first load component (C₁), to minimize a difference of a derivative in the virtual load response output (VL) and the measured load response (ML), such that a maintenance operation for controlling viscous friction is determined.

In a further example, related to the discussion of Figs. 3a-b, the method 1000 comprises assigning 1232 the second load component (C₂) as a second variable load parameter (VC₂) in the mechanical load model (VM), and changing 1232' the second variable load parameter (VC₂), associated with the second load component (C₂), to minimize a difference between the virtual load response output (VL) and the measured load response (ML) with respect to an off-set (o_{y}) between respective maximum and minimum values (min₁, max₁), (min₂, max₂), such that a maintenance operation for controlling static friction is determined.

In a further example, related to the discussion of Figs. 5a-b, the method 1000 comprises assigning 1233 the third load component (C₃) as a third variable load parameter (VC₃) in the mechanical load model (VM), and changing 1233' the third variable load parameter (VC₃), associated with the third load component (C₃), to minimize a difference between the virtual load response output (VL) and the measured load response (ML) with respect to a size of the range (d_{y1}, d_{y2}) between respective maximum and minimum values (min₁, max₁), (min₂, max₂), such that a maintenance operation for controlling inertia, and/or a moment of inertia is determined.

The load components (C₁, C₂, C₃) identified as contributing to the change in the load response, e.g. T₂, over time may thus serve as the basis for choosing a maintenance routine. The virtual load response output (VL) may be automatically optimized to the measured load response (ML) at any point in time, by iteratively adjusting the respective load parameter (VC₁, VC₂, VC₃) so that the difference between the resulting virtual load response output (VL) and the measured load response (ML) is minimized. The correct maintenance routine may thus be determined automatically by the method 1000, based on the determined adjustment of the load parameters (VC₁, VC₂, VC₃). The suggested maintenance routine may be directly notified to the operator or technician.

It is conceivable that a plurality of moving machine components, for respective axes of motion in the packaging or filling machine 300, are represented in the mechanical load model (VM). The measured load response (ML) may thus comprise a plurality of respective load responses for the axes of motion, at a particular point in time. The method 1000, and related system 200, provides for a continuous and/or automatic evaluation of the plurality of respective load responses against the corresponding virtual load response output (VL) from the mechanical load model (VM), which may have been established as a previous reference status of the axes of motion. The evaluation may be run as a batch operation across the plurality of axes of motion, to retrieve the respective load responses, either in sequence or in parallel. Deviations may be detected early and suggested maintenance operations may be directly notified to the operator based on the determined adjustment of the load parameters (VC₁, VC₂, VC₃) as described above. A plurality of moving machine components for respective axes of motion may be grouped in aggregates in the mechanical load model (VM) having multiple sets of load parameters (VC₁, VC₂, VC₃). A maintenance operation may be determined based on how the load parameters (VC₁, VC₂, VC₃) are adjusted in the set as a whole, e.g. for determining maintenance service of the aggregate of machine components as a whole.

The method 1000 thus provides for reliably and timely detecting deviant behavior or impending breakdown, in order to give the operator an effective tool to identify and plan a maintenance activity for the relevant components without impacting production.

A system 200 for condition monitoring of a moving machine component in a packaging or filling machine 300 in a liquid food processing application is also provided. The system 200 comprises a processing unit 201 being schematically illustrated in Fig. 1 in conjunction with 8d.

The processing unit 201 is configured to move 1010 the machine component according to a cycle of a defined motion profile (MP) comprising accelerating 1020 the machine component to overcome a mechanical load so that a velocity (v) and a position of the defined motion profile is followed, where the mechanical load comprises a sum of contributing load components (C) comprising an external mechanical force on the machine component and an inertia, and/or a moment of inertia, that the machine component exhibits. The processing unit 201 is configured to register 1030 values of a measured force (T) causing said acceleration and/or of a measured motion parameter (p) associated with the movement of the machine component according to the defined motion profile; generate 1040 a first distribution (T₁, p₁) of the registered values, associate 1050 the first distribution with a first load response (L₁) in a mechanical load model (VM); generate 1060 a second distribution (T₂, p₂) of associated registered 1070 values of said force and/or motion parameter subsequently measured when moving the machine component according to the cycle at a subsequent point in time; associate 1080 the second distribution with a second load response (L₂) in the mechanical load model, and determine 1090 a change in the load components (C) of the mechanical load at said subsequent point in time comprising determining 1100 an amount of variation of a load component (C) of the mechanical load based on a difference between the first load response (L₁) and the second load response (L₂), for the condition monitoring.

The system 200 thus provides for the advantageous benefits as described above in relation to Figs. 1 - 7. The system 200 provides for an accurate and reliable classification of a condition of the machine component. A facilitated condition monitoring of a moving machine component is thus provided for reliably and timely detecting deviant behavior or impending breakdown with a minimal amount of data analysis needed by the operator.

The processing unit 201 may be configured to assign 1110 the load components (C₁, C₂, C₃) as respective variable load parameters (VC₁, VC₂, VC₃) in the mechanical load model (VM) to generate a virtual load response output (VL) in dependence on the variable load parameters (VC₁, VC₂, VC₃). The processing unit 201 may be configured to determine 1200 a maintenance operation of the machine component after a duration of operation comprising generating 1210 a distribution (e.g. T₂, p₂) of associated registered values (T, p) subsequently measured when moving the machine component according to the cycle, i.e. the defined motion profile (PF), after said duration. The processing unit 201 may be configured to associate 1220 the distribution with a measured load response (ML), and determine 1230 a change of the respective variable load parameter (VC₁, VC₂, VC₃) in the mechanical load model (VM) resulting in a minimized difference between the measured load response (ML) and the virtual load response output (VL). The processing unit 201 may be configured to determine 1240 the maintenance operation based on the change of the respective variable load parameter (VC₁, VC₂, VC₃).

A computer program product is provided comprising instructions which, when the program is executed by a computer, cause the computer to carry out the steps of the method 1000 as described above in relation to Figs. 1 - 7.

From the description above follows that, although various embodiments of the invention have been described and shown, the invention is not restricted thereto, but may also be embodied in other ways within the scope of the subject-matter defined in the following claims.

## Claims

1. A method (1000) for condition monitoring of a moving machine component in a packaging or filling machine (300) in a liquid food processing application, comprising
moving (1010) the machine component according to a cycle of a defined motion profile (PF) comprising
accelerating (1020) the machine component to overcome a mechanical load so that a velocity (v) and a position of the defined motion profile is followed, the mechanical load comprising a sum of contributing load components (C₁, C₂, C₃) comprising
an external mechanical force on the machine component and an inertia, and/or a moment of inertia, that the machine component exhibits, the method further comprising
registering (1030) values of a measured force (T) causing said acceleration and/or of a measured motion parameter (p) associated with the movement of the machine component according to the defined motion profile,
generating (1040) a first distribution (T₁, p₁) of the registered values,
associating (1050) the first distribution with a first load response (L₁) in a mechanical load model (VM),
generating (1060) a second distribution (T₂, p₂) of associated registered (1070) values of said force and/or motion parameter subsequently measured when moving the machine component according to the cycle at a subsequent point in time,
associating (1080) the second distribution with a second load response (L₂) in the mechanical load model, and
determining (1090) a change in the load components of the mechanical load at said subsequent point in time comprising
determining (1100) an amount of variation of a load component of the mechanical load based on a difference between the first load response and the second load response, for said condition monitoring,
assigning (1110) the load components as respective variable load parameters (VC₁, VC₂, VC₃) in the mechanical load model to generate a virtual load response output (VL) in dependence on said variable load parameters,
determining (1200) a maintenance operation of the machine component after a duration of operation comprising
generating (1210) a distribution of associated registered values subsequently measured when moving the machine component according to the cycle after said duration,
associating (1220) said distribution with a measured load response (ML),
determining (1230) a change of the respective variable load parameter (VC₁, VC₂, VC₃) in the mechanical load model resulting in a minimized difference between the measured load response (ML) and the virtual load response output (VL), and
determining (1240) said maintenance operation based on the change of the respective variable load parameter (VC₁, VC₂, VC₃).

2. Method according to claim 1, wherein determining the amount of variation of the load component comprises
determining (1101) a change in a derivative between the first and second distributions of the respective first and second load responses.

3. Method according to claim 2, comprising
determining (1102) the change in the derivative as a change in a viscous friction contributing as an external mechanical force to the mechanical load, and
associating (1103) the load component with the viscous friction.

4. Method according to claim 3, comprising
determining (1103') the load component as a first load component (C₁) in the mechanical load model.

5. Method according to claim 1, wherein determining the amount of variation of the load component comprises
determining (1104) a change in a maximum value (maxi, max₂) and/or a minimum value (mini, min₂) in the first and second distributions of the respective first and second load responses.

6. Method according to claim 5, comprising
determining (1105) an off-set (o_{y}) between the first and second load response with regards to respective maximum and minimum values as a change in a static friction contributing as an external mechanical force to the mechanical load, and
associating (1106) the load component with the static friction.

7. Method according to claim 6, comprising
determining (1106') the load component as a second load component (C₂) in the mechanical load model.

8. Method according to claim 5, comprising
determining (1107) a difference in the size of the range (d_{y1}, d_{y2}) between the minimum and maximum value in the respective first and second load response as a change in the inertia, and/or a moment of inertia, contributing to the mechanical load, and
associating (1108) the load component with the inertia, and/or a moment of inertia.

9. Method according to claim 8, comprising
determining (1108') the load component as a third load component (C₃) in the mechanical load model.

10. Method according to claims 4, 7 and 9, comprising
determining (1109) the amount of variation of the first, second and third load components in the mechanical load model based on said difference between the first load response and the second load response.

11. Method according to claim 10, comprising
assigning (1110) the first, second and third load components as the respective variable load parameters (VC₁, VC₂, VC₃) in the mechanical load model to generate the virtual load response output (VL) in dependence on said variable load parameters.

12. Method according to claims 1 and 4, comprising
assigning (1231) the first load component as a first variable load parameter (VC₁) in the mechanical load model,
changing (1231') the first variable load parameter (VC₁), associated with the first load component, to minimize a difference of a derivative in the virtual load response output and the measured load response, such that a maintenance operation for controlling viscous friction is determined.

13. Method according to claims 1 and 7, comprising
assigning (1232) the second load component as a second variable load parameter (VC₂) in the mechanical load model,
changing (1232') the second variable load parameter (VC₂), associated with the second load component, to minimize a difference between the virtual load response output and the measured load response with respect to an off-set between respective maximum and minimum values, such that a maintenance operation for controlling static friction is determined.

14. Method according to claims 1 and 9, comprising
assigning (1233) the third load component as a third variable load parameter (VC₃) in the mechanical load model,
changing (1233') the third variable load parameter (VC₃), associated with the third load component, to minimize a difference between the virtual load response output and the measured load response with respect to a size of the range between respective maximum and minimum values, such that a maintenance operation for controlling inertia, and/or a moment of inertia is determined.

15. A computer program product comprising instructions which, when the program is executed by a computer, cause the computer to carry out the steps of the method according to any of claims 1-14.

16. A system (200) for condition monitoring of a moving machine component in a packaging or filling machine (300) in a liquid food processing application, comprising a processing unit (201) configured to
move (1010) the machine component according to a cycle of a defined motion profile (MP) comprising
accelerating (1020) the machine component to overcome a mechanical load so that a velocity (v) and a position of the defined motion profile is followed, the mechanical load comprising a sum of contributing load components (C₁, C₂, C₃) comprising an external mechanical force on the machine component and an inertia, and/or a moment of inertia, that the machine component exhibits,
register (1030) values of a measured force (T) causing said acceleration and/or of a measured motion parameter (p) associated with the movement of the machine component according to the defined motion profile,
generate (1040) a first distribution (T₁, p₁) of the registered values,
associate (1050) the first distribution with a first load response (L₁) in a mechanical load model (VM),
generate (1060) a second distribution (T₂, p₂) of associated registered (1070) values of said force and/or motion parameter subsequently measured when moving the machine component according to the cycle at a subsequent point in time,
associate (1080) the second distribution with a second load response (L₂) in the mechanical load model,
determine (1090) a change in the load components of the mechanical load at said subsequent point in time comprising determine (1100) an amount of variation of a load component of the mechanical load based on a difference between the first load response and the second load response, for said condition monitoring,
assign (1110) the load components as respective variable load parameters (VC₁, VC₂, VC₃) in the mechanical load model to generate a virtual load response output (VL) in dependence on said variable load parameters,
determine (1200) a maintenance operation of the machine component after a duration of operation comprising
generating (1210) a distribution of associated registered values subsequently measured when moving the machine component according to the cycle after said duration,
associating (1220) said distribution with a measured load response (ML),
determining (1230) a change of the respective variable load parameter (VC₁, VC₂, VC₃) in the mechanical load model resulting in a minimized difference between the measured load response (ML) and the virtual load response output (VL), and
determining (1240) said maintenance operation based on the change of the respective variable load parameter (VC₁, VC₂, VC₃).

## Patentansprüche

1. Verfahren (1000) zur Zustandsüberwachung einer beweglichen Maschinenkomponente in einer Verpackungs- oder Befüllungsmaschine (300) in einer Flüssignahrungsmittelverarbeitungsanwendung, das Folgendes umfasst:
Bewegen (1010) der Maschinenkomponente gemäß einem Zyklus eines definierten Bewegungsprofils (PF), Folgendes umfassend:
Beschleunigen (1020) der Maschinenkomponente zum Überwinden einer mechanischen Last, sodass eine Geschwindigkeit (v) und eine Position des definierten Bewegungsprofils befolgt werden, wobei die mechanische Last eine Summe von beitragenden Lastkomponenten (C₁, C₂, C₃) umfasst, Folgendes umfassend:
eine externe mechanische Kraft auf der Maschinenkomponente und eine Trägheit und/oder ein Trägheitsmoment, die bzw. das die Maschinenkomponente zeigt, wobei das Verfahren ferner Folgendes umfasst:
Registrieren (1030) von Werten einer gemessenen Kraft (T), die die Beschleunigung verursacht, und/oder eines gemessenen Bewegungsparameters (p) in Verbindung mit der Bewegung der Maschinenkomponente gemäß dem definierten Bewegungsprofil,
Erzeugen (1040) einer ersten Verteilung (T₁, p₁) der registrierten Werte,
Verknüpfen (1050) der ersten Verteilung mit einer ersten Lastantwort (L₁) in einem mechanischen Lastmodell (VM), Erzeugen (1060) einer zweiten Verteilung (T₂, p₂) von verknüpften registrierten (1070) Werten der Kraft und/oder des Bewegungsparameters, die nachfolgend gemessen werden, wenn die Maschinenkomponente zu einem nachfolgenden Zeitpunkt gemäß dem Zyklus bewegt wird,
Verknüpfen (1080) der zweiten Verteilung mit einer zweiten Lastantwort (L₂) in dem mechanischen Lastmodell, und
Bestimmen (1090) einer Änderung in den Lastkomponenten der mechanischen Last zu dem nachfolgenden Zeitpunkt, Folgendes umfassend:
Bestimmen (1100) eines Betrags von Variation einer Lastkomponente der mechanischen Last basierend auf einer Differenz zwischen der ersten Lastantwort und der zweiten Lastantwort für die Zustandsüberwachung,
Zuordnen (1110) der Lastkomponenten als entsprechende variable Lastparameter (VC₁, VC₂, VC₃) im mechanischen Lastmodell zum Erzeugen eines virtuellen Lastantwortausgangs (VL) in Abhängigkeit von den variablen Lastparametern,
Bestimmen (1200) einer Wartungsoperation der Maschinenkomponente nach einer Dauer der Operation, Folgendes umfassend:
Erzeugen (1210) einer Verteilung von verknüpften registrierten Werten, die nachfolgend gemessen werden, wenn die Maschine nach der Dauer gemäß dem Zyklus bewegt wird,
Verknüpfen (1220) der Verteilung mit einer gemessenen Lastantwort (ML),
Bestimmen (1230) einer Änderung des entsprechenden variablen Lastparameters (VC₁, VC₂, VC₃) im mechanischen Lastmodell, die in einer minimierten Differenz zwischen der gemessenen Lastantwort (ML) und dem virtuellen Lastantwortausgang (VL) resultiert, und
Bestimmen (1240) der Wartungsoperation basierend auf der Änderung des entsprechenden variablen Lastparameters (VC₁, VC₂, VC₃).

2. Verfahren nach Anspruch 1, wobei Bestimmen des Betrags von Variation der Lastkomponente Folgendes umfasst:
Bestimmen (1101) einer Änderung in einer Ableitung zwischen den ersten und zweiten Verteilung der entsprechenden ersten und zweiten Lastantwort.

3. Verfahren nach Anspruch 2, das Folgendes umfasst:
Bestimmen (1102) der Änderung in der Ableitung als eine Änderung in einer viskosen Reibung, die als eine externe mechanische Kraft zur mechanischen Last beiträgt, und
Verknüpfen (1103) der Lastkomponente mit der viskosen Reibung.

4. Verfahren nach Anspruch 3, das Folgendes umfasst:
Bestimmen (1103') der Lastkomponente als eine erste Lastkomponente (C₁) im mechanischen Lastmodell.

5. Verfahren nach Anspruch 1, wobei Bestimmen des Betrags von Variation der Lastkomponente Folgendes umfasst:
Bestimmen (1104) einer Änderung in einem Maximalwert (max₁, max₂) und/oder einem Minimalwert (min₂, min₂) in der ersten und zweiten Verteilung der entsprechenden ersten und zweiten Lastanwort.

6. Verfahren nach Anspruch 5, das Folgendes umfasst:
Bestimmen (1105) eines Versatzes (o_{y}) zwischen der ersten und zweiten Lastantwort bezüglich entsprechender Maximal- und Minimalwerte als eine Änderung in einer statischen Reibung, die als eine externe mechanische Kraft zur mechanischen Last beiträgt, und
Verknüpfen (1106) der Lastkomponente mit der statischen Reibung.

7. Verfahren nach Anspruch 6, das Folgendes umfasst: Bestimmen (1106') der Lastkomponente als eine zweite Lastkomponente (C₂) im mechanischen Lastmodell.

8. Verfahren nach Anspruch 5, das Folgendes umfasst:
Bestimmen (1107) einer Differenz in der Größe des Bereichs (d_{y1}, d_{y2}) zwischen dem Minimal- und dem Maximalwert in der entsprechenden ersten und zweiten Lastantwort als eine Änderung in der Trägheit und/oder einem Trägheitsmoment, die bzw. das zur mechanischen Last beiträgt, und
Verknüpfen (1108) der Lastkomponente mit der Trägheit und/oder einem Trägheitsmoment.

9. Verfahren nach Anspruch 8, das Folgendes umfasst: Bestimmen (1108') der Lastkomponente als eine dritte Lastkomponente (C₃) im mechanischen Lastmodell.

10. Verfahren nach Ansprüchen 4, 7 und 9, das Folgendes umfasst:
Bestimmen (1109) des Betrags an Variation der ersten, zweiten und dritten Lastkomponente im mechanischen Lastmodell basierend auf der Differenz zwischen der ersten Lastantwort und der zweiten Lastantwort.

11. Verfahren nach Anspruch 10, das Folgendes umfasst:
Zuordnen (1110) der ersten, zweiten und dritten Lastkomponente als der entsprechende variable Lastparameter (VC₁, VC₂, VC₃) im mechanischen Lastmodell zum Erzeugen des virtuellen Lastantwortausgangs (VL) in Abhängigkeit von den variablen Lastparametern.

12. Verfahren nach Ansprüchen 1 und 4, das Folgendes umfasst:
Zuordnen (1231) der ersten Lastkomponente als ein erster variabler Lastparameter (VC₁) im mechanischen Lastmodell, Ändern (1231') des ersten variablen Lastparameters (VC₁), in Verbindung mit der ersten Lastkomponente, zum Minimieren einer Differenz einer Ableitung im virtuellen Lastantwortausgang und der gemessenen Lastantwort, sodass eine Wartungsoperation zum Steuern von viskoser Reibung bestimmt wird.

13. Verfahren nach Ansprüchen 1 und 7, das Folgendes umfasst:
Zuordnen (1232) der zweiten Lastkomponente als ein zweiter variabler Lastparameter (VC₂) im mechanischen Lastmodell,
Ändern (1232') des zweiten variablen Lastparameters (VC₂), in Verbindung mit der zweiten Lastkomponente, zum Minimieren einer Differenz zwischen dem virtuellen Lastantwortausgang und der gemessenen Lastantwort bezüglich eines Versatzes zwischen entsprechenden Maximal- und Minimalwerten, sodass eine Wartungsoperation zum Steuern statischer Reibung bestimmt wird.

14. Verfahren nach Ansprüchen 1 und 9, das Folgendes umfasst:
Zuordnen (1233) der dritten Lastkomponente als ein dritter variabler Lastparameter (VC₃) im mechanischen Lastmodell,
Ändern (1233') des dritten variablen Lastparameters (VC₃), in Verbindung mit der dritten Lastkomponente, zum Minimieren einer Differenz zwischen dem virtuellen Lastantwortausgang und der gemessenen Lastantwort bezüglich einer Größe des Bereichs zwischen entsprechenden Maximal- und Minimalwerten, sodass eine Wartungsoperation zum Steuern von Trägheit und/oder einem Trägheitsmoment bestimmt wird.

15. Computerprogrammprodukt, umfassend Anweisungen, die, wenn das Programm durch einen Computer ausgeführt wird, den Computer veranlassen, die Schritte des Verfahrens nach einem der Ansprüche 1 - 14 auszuführen.

16. System (200) zur Zustandsüberwachung einer beweglichen Maschinenkomponente in einer Verpackungs- oder Befüllungsmaschine (300) in einer Flüssignahrungsmittelverarbeitungsanwendung, das eine Verarbeitungseinheit (201) umfasst, die ausgelegt ist zum:
Bewegen (1010) der Maschinenkomponente gemäß einem Zyklus eines definierten Bewegungsprofils (MP), Folgendes umfassend:
Beschleunigen (1020) der Maschinenkomponente zum Überwinden einer mechanischen Last, sodass eine Geschwindigkeit (v) und eine Position des definierten Bewegungsprofils befolgt werden, wobei die mechanische Last eine Summe von beitragenden Lastkomponenten (C₁, C₂, C₃) umfasst, die eine externe mechanische Kraft auf der Maschinenkomponente und eine Trägheit und/oder ein Trägheitsmoment, die bzw. das die Maschinenkomponente zeigt, umfassen,
Registrieren (1030) von Werten einer gemessenen Kraft (T), die die Beschleunigung verursacht, und/oder eines gemessenen Bewegungsparameters (p) in Verbindung mit der Bewegung der Maschinenkomponente gemäß dem definierten Bewegungsprofil,
Erzeugen (1040) einer ersten Verteilung (T₁, p₁) der registrierten Werte,
Verknüpfen (1050) der ersten Verteilung mit einer ersten Lastantwort (L₁) in einem mechanischen Lastmodell (VM), Erzeugen (1060) einer zweiten Verteilung (T₂, p₂) von verknüpften registrierten (1070) Werten der Kraft und/oder des Bewegungsparameters, die nachfolgend gemessen werden, wenn die Maschinenkomponente zu einem nachfolgenden Zeitpunkt gemäß dem Zyklus bewegt wird,
Verknüpfen (1080) der zweiten Verteilung mit einer zweiten Lastantwort (L₂) in dem mechanischen Lastmodell, Bestimmen (1090) einer Änderung in den Lastkomponenten der mechanischen Last zu dem nachfolgenden Zeitpunkt, umfassend Bestimmen (1100) eines Betrags von Variation einer Lastkomponente der mechanischen Last basierend auf einer Differenz zwischen der ersten Lastantwort und der zweiten Lastantwort für die Zustandsüberwachung,
Zuordnen (1110) der Lastkomponenten als entsprechende variable Lastparameter (VC₁, VC₂, VC₃) im mechanischen Lastmodell zum Erzeugen eines virtuellen Lastantwortausgangs (VL) in Abhängigkeit von den variablen Lastparametern,
Bestimmen (1200) einer Wartungsoperation der Maschinenkomponente nach einer Dauer der Operation, Folgendes umfassend:
Erzeugen (1210) einer Verteilung von verknüpften registrierten Werten, die nachfolgend gemessen werden, wenn die Maschine nach der Dauer gemäß dem Zyklus bewegt wird,
Verknüpfen (1220) der Verteilung mit einer gemessenen Lastantwort (ML),
Bestimmen (1230) einer Änderung des entsprechenden variablen Lastparameters (VC₁, VC₂, VC₃) im mechanischen Lastmodell, die in einer minimierten Differenz zwischen der gemessenen Lastantwort (ML) und dem virtuellen Lastantwortausgang (VL) resultiert, und
Bestimmen (1240) der Wartungsoperation basierend auf der Änderung des entsprechenden variablen Lastparameters (VC₁, VC₂, VC₃).

## Revendications

1. Procédé (1000) de surveillance d'état d'un composant mobile de machine dans une machine d'emballage ou de remplissage (300) dans une application de traitement d'aliments liquides, comprenant
le déplacement (1010) du composant de machine selon un cycle d'un profil de mouvement (PF) défini comprenant
l'accélération (1020) du composant de machine pour surmonter une charge mécanique de sorte qu'une vitesse (v) et une position du profil de mouvement défini sont suivies, la charge mécanique comprenant une somme de composantes de charge contributrices (C₁, C₂, C₃) comprenant
une force mécanique externe sur le composant de machine et une inertie, et/ou un moment d'inertie, que le composant de machine présente, le procédé comprenant en outre
l'enregistrement (1030) de valeurs d'une force mesurée (T) causant ladite accélération et/ou d'un paramètre de mouvement mesuré (p) associé au mouvement du composant de machine selon le profil de mouvement défini,
la génération (1040) d'une première distribution (T₁, p₁) des valeurs enregistrées,
l'association (1050) de la première distribution à une première réponse de charge (L₁) dans un modèle de charge mécanique (VM),
la génération (1060) d'une seconde distribution (T₂, p₂) de valeurs enregistrées associées (1070) dudit paramètre de force et/ou de mouvement mesuré ultérieurement lors du déplacement du composant de machine selon le cycle à un instant suivant,
l'association (1080) de la seconde distribution à une seconde réponse de charge (L₂) dans le modèle de charge mécanique, et
la détermination (1090) d'un changement dans les composantes de charge de la charge mécanique audit instant ultérieur comprenant
la détermination (1100) d'une quantité de variation d'une composante de charge de la charge mécanique sur la base d'une différence entre la première réponse de charge et la seconde réponse de charge, pour ladite surveillance d'état,
l'attribution (1110) des composantes de charge en tant que paramètres de charge variable respectifs (VC₁, VC₂, VC₃) dans le modèle de charge mécanique pour générer une sortie de réponse de charge virtuelle (VL) en fonction desdits paramètres de charge variable,
la détermination (1200) d'une opération de maintenance du composant de machine après une durée de fonctionnement comprenant
la génération (1210) d'une distribution de valeurs enregistrées associées mesurées ultérieurement lors du déplacement du composant de machine selon le cycle après ladite durée,
l'association (1220) de ladite distribution à une réponse de charge mesurée (ML),
la détermination (1230) d'un changement du paramètre de charge variable (VC₁, VC₂, VC₃) respectif dans le modèle de charge mécanique résultant en une différence minimisée entre la réponse de charge mesurée (ML) et la sortie de réponse de charge virtuelle (VL), et
la détermination (1240) de ladite opération de maintenance sur la base du changement du paramètre de charge variable (VC₁, VC₂, VC₃) respectif.

2. Procédé selon la revendication 1, dans lequel la détermination de la quantité de variation de la composante de charge comprend
la détermination (1101) d'un changement dans une dérivée entre les première et seconde distributions des première et seconde réponses de charge respectives.

3. Procédé selon la revendication 2, comprenant
la détermination (1102) du changement dans la dérivée en tant que changement d'un frottement visqueux contribuant en tant que force mécanique externe à la charge mécanique, et
l'association (1103) de la composante de charge au frottement visqueux.

4. Procédé selon la revendication 3, comprenant la détermination (1103') de la composante de charge en tant que première composante de charge (C₁) dans le modèle de charge mécanique.

5. Procédé selon la revendication 1, dans lequel la détermination de la quantité de variation de la composante de charge comprend
la détermination (1104) d'un changement dans une valeur maximale (max₁, max₂) et/ou une valeur minimale (min₁, min₂) dans les première et seconde distributions des première et seconde réponses de charge respectives.

6. Procédé selon la revendication 5, comprenant
la détermination (1105) d'un décalage (o_{y}) entre les première et seconde réponses de charge par rapport à des valeurs maximale et minimale respectives en tant que changement dans un frottement statique contribuant en tant que force mécanique externe à la charge mécanique, et
l'association (1106) de la composante de charge au frottement statique.

7. Procédé selon la revendication 6, comprenant la détermination (1106') de la composante de charge en tant que seconde composante de charge (C₂) dans le modèle de charge mécanique.

8. Procédé selon la revendication 5, comprenant
la détermination (1107) d'une différence dans la taille de la plage (d_{y1}, d_{y2}) entre les valeurs minimale et maximale dans les première et seconde réponses de charge respectives en tant que changement de l'inertie, et/ou d'un moment d'inertie, contribuant à la charge mécanique, et
l'association (1108) de la composante de charge à l'inertie, et/ou à un moment d'inertie.

9. Procédé selon la revendication 8, comprenant la détermination (1108') de la composante de charge en tant que troisième composante de charge (C₃) dans le modèle de charge mécanique.

10. Procédé selon les revendications 4, 7 et 9, comprenant
la détermination (1109) de la quantité de variation des première, seconde et troisième composantes de charge dans le modèle de charge mécanique sur la base de ladite différence entre la première réponse de charge et la seconde réponse de charge.

11. Procédé selon la revendication 10, comprenant l'attribution (1110) des première, seconde et troisième composantes de charge en tant que paramètres de charge variable (VC₁, VC₂, VC₃) respectifs dans le modèle de charge mécanique pour générer la sortie de réponse de charge virtuelle (VL) en fonction desdits paramètres de charge variable.

12. Procédé selon les revendications 1 et 4, comprenant l'attribution (1231) de la première composante de charge en tant que premier paramètre de charge variable (VC₁) dans le modèle de charge mécanique,
le changement (1231') du premier paramètre de charge variable (VC₁), associé à la première composante de charge, pour minimiser une différence d'une dérivée dans la sortie de réponse de charge virtuelle et la réponse de charge mesurée, de telle sorte qu'une opération de maintenance pour contrôler le frottement visqueux est déterminée.

13. Procédé selon les revendications 1 et 7, comprenant l'attribution (1232) de la seconde composante de charge en tant que second paramètre de charge variable (VC₂) dans le modèle de charge mécanique,
le changement (1232') du second paramètre de charge variable (VC₂), associé à la seconde composante de charge, pour minimiser une différence entre la sortie de réponse de charge virtuelle et la réponse de charge mesurée par rapport à un décalage entre des valeurs maximale et minimale respectives, de telle sorte qu'une opération de maintenance pour contrôler le frottement statique est déterminée.

14. Procédé selon les revendications 1 et 9, comprenant l'attribution (1233) de la troisième composante de charge en tant que troisième paramètre de charge variable (VC₃) dans le modèle de charge mécanique,
le changement (1233') du troisième paramètre de charge variable (VC₃), associé à la troisième composante de charge, pour minimiser une différence entre la sortie de réponse de charge virtuelle et la réponse de charge mesurée par rapport à une taille de la plage entre des valeurs maximale et minimale respectives, de telle sorte qu'une opération de maintenance pour contrôler l'inertie, et/ou un moment d'inertie est déterminée.

15. Produit de programme informatique comprenant des instructions qui, lorsque le programme est exécuté par un ordinateur, amènent l'ordinateur à réaliser les étapes du procédé selon l'une quelconque des revendications 1 à 14.

16. Système (200) de surveillance d'état d'un composant mobile de machine dans un une machine d'emballage ou de remplissage (300) dans une application de traitement d'aliments liquides, comprenant une unité de traitement (201) configurée pour
déplacer (1010) le composant de machine selon un cycle d'un profil de mouvement (MP) défini comprenant l'accélération (1020) du composant de machine pour surmonter une charge mécanique de sorte qu'une vitesse (v) et une position du profil de mouvement défini sont suivies, la charge mécanique comprenant une somme de composantes de charge contributrices (C₁, C₂, C₃) comprenant une force mécanique externe sur le composant de machine et une inertie, et/ou un moment d'inertie, que le composant de machine présente,
enregistrer (1030) des valeurs d'une force mesurée (T) causant ladite accélération et/ou d'un paramètre de mouvement mesuré (p) associé au mouvement du composant de machine selon le profil de mouvement défini,
générer (1040) une première distribution (T₁, p₁) des valeurs enregistrées,
associer (1050) la première distribution à une première réponse de charge (L₁) dans un modèle de charge mécanique (VM),
générer (1060) une seconde distribution (T₂, p₂) de valeurs enregistrées associées (1070) dudit paramètre de force et/ou de mouvement mesuré ultérieurement lors du déplacement du composant de machine selon le cycle à un instant ultérieur,
associer (1080) la seconde distribution à une seconde réponse de charge (L₂) dans le modèle de charge mécanique,
déterminer (1090) un changement dans les composantes de charge de la charge mécanique audit instant ultérieur comprenant la détermination (1100) d'une quantité de variation d'une composante de charge de la charge mécanique sur la base d'une différence entre la première réponse de charge et la seconde réponse de charge, pour ladite surveillance d'état,
attribuer (1110) les composantes de charge en tant que paramètres de charge variable (VC₁, VC₂, VC₃) respectifs dans le modèle de charge mécanique pour générer une sortie de réponse de charge virtuelle (VL) en fonction desdits paramètres de charge variable,
déterminer (1200) une opération de maintenance du composant de machine après une durée de fonctionnement comprenant
la génération (1210) d'une distribution de valeurs enregistrées associées mesurées ultérieurement lors du déplacement du composant de machine selon le cycle après ladite durée,
l'association (1220) de ladite distribution à une réponse de charge mesurée (ML),
la détermination (1230) d'un changement du paramètre de charge variable (VC₁, VC₂, VC₃) respectif dans le modèle de charge mécanique résultant en une différence minimisée entre la réponse de charge mesurée (ML) et la sortie de réponse de charge virtuelle (VL), et
la détermination (1240) de ladite opération de maintenance sur la base du changement du paramètre de charge variable (VC₁, VC₂, VC₃) respectif.
